# EUROPÄISCHE PATENTSCHRIFT

(11) **EP 2 468 380 B1**
(45) Veröffentlichungstag und Bekanntmachung des Hinweises auf die Patenterteilung: **28.02.2018**
(21) Anmeldenummer: 11193731.4
(22) Anmeldetag: 15.12.2011
(51) Int. Cl.: B01D 33/067, B01D 33/09, B01D 33/23, B01D 33/82, B01D 33/74, B01D 33/80

(54) **Filtervorrichtung**
Filter device
Dispositif de filtre

(30) Priorität: 27.12.2010 DE 102010061561
(43) Veröffentlichungstag der Anmeldung: 27.06.2012
(73) Patentinhaber: Andritz KMPT GmbH, 85256 Vierkirchen (DE)
(72) Erfinder: Grim, Gunnar, 85258 Weichs (DE); Hegnauer, Bruno, 82131 Gauting (DE)
(74) Vertreter: Viering, Jentschura & Partner mbB Patent- und Rechtsanwälte

(56) Entgegenhaltungen:
- US-A- 3 096 280
- US-A- 3 630 380
- US-A- 4 695 381
- US-A- 5 046 338
- US-A- 5 683 582
- US-A1- 2005 077 254

## Beschreibung

Die Erfindung betrifft eine Filtervorrichtung, z.B. eine Filtervorrichtung zur Verwendung bei der Herstellung pharmazeutischer Produkte.

In der pharmazeutischen Industrie umfasst der Herstellungsprozess von medizinischen Produkten, einschließlich chemisch basierten sowie biologisch basierten medizinischen Produkten, oftmals auch das Ausfiltern des in einer Suspension als Feststoff vorliegenden Produkts.

Aufgrund der hohen Anforderungen an die Produktqualität sowie an die Sauberkeit, Reinigbarkeit und Inspizierbarkeit der Filtervorrichtung(en), werden in der Pharmaindustrie in der Regel diskontinuierliche/batchweise Filterprozesse angewandt. Hierbei besteht jedoch der Nachteil einer verringerten Produktivität, die z.B. aus dem geringen Verhältnis zwischen produktiver Phase zu unproduktiver Phase resultiert.

Die US 3 096 280 A offenbart eine Filtervorrichtung zum Ausfiltern von Feststoff aus einem Feststoff-Flüssigkeit-Gemisch, mit einem sich entlang einer Rotationsachse erstreckenden Lagerschaft, einem am Lagerschaft angebrachten und um die Rotationsachse rotierbar gelagerten Rotationskörper, einer Vielzahl von Filterzellen, die am Rotationskörper ausgebildet sind und jeweils aufweisen: ein am Rotationskörper angebrachtes Filtermittel zum Ausfiltern des Feststoffs aus dem Feststoff-Flüssigkeit-Gemisch unter Passieren-Lassen der Flüssigkeit des Feststoff-Flüssigkeit-Gemischs von einer Filtermitteleingangsseite zu einer Filtermittelausgangsseite und einen Verbindungskanal, der im Rotationskörper ausgebildet ist und sich von der Filtermittelausgangsseite aus erstreckt und in den Lagerschaftgeführt ist, von welchem aus er stirnseitig in einer Mündungsöffnung ausmündet, die mit einer Drehfilterventilvorrichtung verbunden ist.

Die US 4 695 281 offenbart eine Filtervorrichtung zum Ausfiltern von Feststoff aus einem Feststoff-Flüssigkeit-Gemisch, mit einem sich entlang einer Rotationsachse erstreckenden Lagerschaft, einem am Lagerschaft angebrachten und um die Rotationsachse rotierbar gelagerten Rotationskörper, einer Vielzahl von Filterzellen, die am Rotationskörper ausgebildet sind und jeweils aufweisen: ein am Rotationskörper angebrachtes Filtermittel zum Ausfiltern des Feststoffs aus dem Feststoff-Flüssigkeit-Gemisch unter Passieren-Lassen der Flüssigkeit des Feststoff-Flüssigkeit-Gemischs von einer Filtermitteleingangsseite zu einer Filtermittelausgangsseite und einen Verbindungskanal, der im Rotationskörper ausgebildet ist und sich von der

Filtermittelausgangsseite aus erstreckt und in einer Mündungsöffnung ausmündet.

Die US 5 046 338 A offenbart eine zu der oben erläuterten US 3 096 280 A ähnliche Filtervorrichtung.

Die US 5 683 582 A offenbart eine Filtervorrichtung zum Ausfiltern von Feststoff aus einem Feststoff-Flüssigkeit-Gemisch, einem um eine Rotationsachse rotierbare Rotationskörper, einer Vielzahl von Filterzellen, die am Rotationskörper ausgebildet sind und jeweils aufweisen: ein am Rotationskörper angebrachtes Filtermittel zum Ausfiltern des Feststoffs aus dem Feststoff-Flüssigkeit-Gemisch unter Passieren-Lassen der Flüssigkeit des Feststoff-Flüssigkeit-Gemischs von einer Filtermitteleingangsseite zu einer Filtermittelausgangsseite und einen Verbindungskanal, der im Rotationskörper ausgebildet ist und sich von der Filtermittelausgangsseite aus erstreckt und in ein Ventil ausmündet, über welches der Verbindungskanal mit einem Abführkanal verbunden ist.

Die US 3 630 380 A offenbart eine zu der oben erläuterten US 3 096 280 A ähnliche Filtervorrichtung.

Durch die Erfindung wird eine Filtervorrichtung geschaffen, mit welcher eine höhere Produktivität erreicht wird und welche im Hinblick auf z.B. die Produktqualität und z.B. die Sauberkeit, Reinigbarkeit und Inspizierbarkeit der Filtervorrichtung den in der Pharmaindustrie gestellten Anforderungen nachkommen kann, sodass sie für die Herstellung pharmazeutischer Produkte einsetzbar ist.

Gemäß der Erfindung wird eine Filtervorrichtung zum Ausfiltern von Feststoff aus einem Feststoff-Flüssigkeit-Gemisch bereitgestellt, mit einem sich entlang einer Rotationsachse erstreckenden Lagerschaft, einem am Lagerschaft angebrachten, z.B. abnehmbar angebrachten, und mittels des Lagerschafts um die Rotationsachse rotierbar gelagerten Rotationskörper, einer einzigen Filterzelle, die am Rotationskörper ausgebildet ist und die aufweist ein am Rotationskörper, z.B. am Außenumfang des Rotationskörpers, angebrachtes Filtermittel zum Ausfiltern des Feststoffs aus dem Feststoff-Flüssigkeit-Gemisch unter Passieren-Lassen der Flüssigkeit des Feststoff-Flüssigkeit-Gemischs von einer Filtermitteleingangsseite zu einer Filtermittelausgangsseite und einen Verbindungskanal, der im Rotationskörper ausgebildet ist und sich von der Filtermittelausgangsseite aus erstreckt und in einer Mündungsöffnung ausmündet, die an den Lagerschaft angrenzend ausgebildet ist und über welche der Verbindungskanal unabhängig von der Rotationsposition des Rotationskörpers stets mit einem sich im Lagerschaft ausgebildeten Zwischenverbindungskanal (fluiddicht) verbunden ist, welcher Zwischenverbindungskanal sich in und entlang der Rotationsachse erstreckt, einer Flüssigkeitsabführleitung, die ((im Betrieb) permanent) mit dem Zwischenverbindungskanal verbunden bzw. die an den Zwischenverbindungskanal angeschlossen ist oder von dem Zwischenverbindungskanal gebildet ist, einer Mehrzahl von Abzweigleitungen, die von der Flüssigkeitsabführleitung ausgehend abgezweigt sind, und einer Steuereinrichtung mit einer Ventileinrichtung, mittels welcher die Abzweigleitungen in Abhängigkeit von der Rotationsposition des Rotationskörpers mit der Flüssigkeitsabführleitung in gesteuerter Weise, z.B. selektiv, verbindbar sind.

Die Ventileinrichtung weist z.B. eine Mehrzahl von Ventilen auf, z.B. in Form eines Ventilregisters oder einer Ventilinsel, die den Abzweigleitungen zugeordnet angeordnet sind und über welche die Abzweigleitungen in Abhängigkeit von der Rotationsposition des Rotationskörpers mit der Flüssigkeitsabführleitung in gesteuerter Weise, z.B. selektiv, verbindbar sind. Die Ventileinrichtung kann aber auch ein Mehrwege-Ventil, z.B. in Form eines Drehventils, sein.

Die Ventileinrichtung (z.B. die Mehrzahl von Ventilen) ist z.B. unmittelbar an oder in der Flüssigkeitsabführleitung angeordnet. Im Falle der Verwendung von mehreren Ventilen sind diese z.B. direkt an oder in der Flüssigkeitsabführleitung angeordnet. Falls die Flüssigkeitsabführleitung von dem im Lagerschaft ausgebildeten Zwischenverbindungkanal gebildet ist bzw. mit diesem identisch ist, kann die Ventileinrichtung z.B. unmittelbar am Lagerschaft angeordnet sein und z.B. ausgebildet sein in Form einer mit dem Lagerschaft mitdrehenden Dichtscheibe (insofern der Lagerschaft drehbar gelagert ist), in welcher eine bezüglich der Rotationsachse exzentrisch angeordnete bzw. exzentrisch ausmündende Durchgangsöffnung ausgebildet ist, die (stets) in Fluidverbindung mit dem Zwischenverbindungskanal steht, und einer stationären Steuerscheibe, die mit der Dichtscheibe in einem fluiddichten Gleitrotationseingriff steht und in welcher Steueröffnungen ausgebildet sind, die in Abhängigkeit von der Rotation des Lagerschafts und damit der Dichtscheibe in gesteuerter Weise (sukzessive wiederholt) mit der Durchgangsöffnung in Verbindung gebracht werden und an die die Abzweigleitungen angeschlossen sind.

Die Steuereinrichtung kann z.B. als eine Drucksteuervorrichtung ausgebildet sein oder eine Drucksteuervorrichtung aufweisen, von welcher eine Druckdifferenz zwischen der Filtermittelausgangsseite und der Filtermitteleingangsseite in Abhängigkeit von der Rotationsposition des Rotationskörpers von der Filtermittelausgangsseite her steuerbar, z.B. variierbar, ist. (Es ist zu verstehen, dass - im Hinblick auf die genannte Druckdifferenz - mit sich am Filtermittel ablagerndem/anhaftendem Feststoff sich die Filtermitteleingangseite von einer Position unmittelbar an der Außenseite des Filtermittels zu einer Position an der Außenseite des am Filtermittel anhaftenden Feststoffs/Filterkuchens verschieben kann bzw. verschiebt.)

Der Zwischenverbindungskanal kann in bzw. entlang der Rotationsachse verlaufen, wobei der Lagerschaft z.B. als Hohlschaft mit einem axialen, zentralen Durchgangskanal ausgebildet ist. Die Längsachse des Lagerschafts fällt z.B. mit der Rotationsachse zusammen. Die Mündungsöffnung ist z.B. konzentrisch zur Rotationsachse ausgebildet und ist angrenzend an die im Stirnende des Lagerschafts ausgebildete Eingangsöffnung des Zwischenverbindungskanals angeordnet. D.h., die Mündungsöffnung des Verbindungskanals und die Eingangsöffnung des Zwischenverbindungskanals sind z.B. axial (bzgl. der Rotationsachse) fluchtend zueinander angeordnet.

Das Filtermittel kann auswechselbar oder nichtauswechselbar am Rotationskörper angebracht sein. Im Falle der Auswechselbarkeit kann beim Wechseln des zu filternden Produkts/Gemisches das Filtermittel ausgewechselt werden, wobei der Rotationskörper ggf. zu reinigen ist.

Der einfache Aufbau mit einer einzelnen Filterzelle und dem einzelnen sich daran anschließenden Kanalstrang mit in Serie geschaltetem Verbindungskanal, Zwischenverbindungskanal und Flüssigkeitsabführleitung ist leicht sauber zu halten (wenig Totraum und damit wenig Raum für Schmutzansammlung) und einfach auf Sauberkeit hin zu inspizieren. Im Falle der Nichtauswechselbarkeit des Filtermittels kann der Rotationskörper als Einmalfilter-Rotationskörper ausgebildet sein, der bei Wechsel auf ein anderes zu filterndes Produkt/Gemisch insgesamt gewechselt werden kann.

Das Filtermittel kann ein Filtertuch/Siebtuch sein, das (im Bereich der Filterzelle) auf den Außenumfang des Rotationskörpers aufgebracht, z.B. aufgespannt ist, oder es kann auch ein Hartkörpersieb aus z.B. Metall oder festerem Kunststoff sein. Das Filtermittel kann zum Beispiel von einer perforierten Stützplatte, z.B. einer Metall- oder Kunststoffstützplatte, gestützt sein. Das Filtermittel kann auswechselbar oder nicht-auswechselbar am Rotationskörper angebracht sein.

Der Rotationskörper kann irgendeine beliebige geometrische Gestalt haben. So kann er z.B. in Form einer Zylindertrommel (z.B. Kreiszylindertrommel) oder in Form eines (Kreis-) Zylindertrommelsegments ausgebildet sein, wobei im Falle einer zylindrischen oder zylindersegmentförmigen Ausbildung des Rotationskörpers die (Längs-)Zylinderachse z.B. konzentrisch zur Rotationsachse angeordnet ist. Der Rotationskörper kann aber auch als Quader oder als Prisma oder als Torus, etc. ausgebildet sein. Die Rotationachse verläuft im Wesentlichen horizontal, wobei auch eine zur Horizontalen in einem Winkel von kleiner als 90° schräg verlaufende Rotationsachse vorgesehen sein kann.

Der Lagerschaft weist z.B. ein freies Ende auf, wobei der Rotationskörper am freien Ende des Lagerschafts angebracht sowie nur einseitig mittels einer Lagerung gelagert ist. Der Rotationskörper kann alternativ auch beidseitig gelagert sein, wobei sich der Lagerschaft z.B. durch den Rotationskörper hindurch erstrecken und beidseitig des Rotationskörpers in einer Lagerung aufgenommen sein kann oder wobei der Rotationskörper an einem freien Ende des Lagerschafts angebracht und auf seiner vom Lagerschaft abgewandten (Axial-) Seite von einem vom Lagerschaft separaten Stützschaft zusätzlich abgestützt ist. Der vom Lagerschaft separate Stützschaft ist konzentrisch zur Rotationsachse angeordnet und kann z.B. an/in einem abnehmbaren Gehäusedeckel eines Gehäuses, in welchem der Rotationskörper aufgenommen ist, gelagert sein/angebracht sein und z.B. zusammen mit dem Gehäusedeckel abnehmbar ausgebildet sein.

Die Ventileinrichtung (z.B. deren Ventile/Ventilregister) der Steuereinrichtung ist z.B. direkt an der Flüssigkeitsabführleitung angeordnet. Indem mittels der Ventileinrichtung (z.B. deren Ventile/Ventilregister) die entsprechende Mehrzahl von Abzweigleitungen in Abhängigkeit von der Rotationsposition des Rotationskörpers mit der Flüssigkeitsabführleitung in gesteuerter Weise, z.B. selektiv, verbindbar sind, kann via die Flüssigkeitsabführleitung abgeführtes Fluid (Flüssigkeit oder Gas) von der Flüssigkeitsabführleitung in gesteuerter Weise, z.B. selektiv, gesondert abgezweigt werden, um dadurch z.B. unterschiedliche Fluide/Flüssigkeiten gesondert abzuführen (wird weiter unten noch im Detail erläutert).

Im Falle der Ausbildung der Steuereinrichtung als Drucksteuervorrichtung kann z.B. die Flüssigkeitsabführleitung über die jeweilige Abzweigleitung mit einem dieser jeweils zugeordneten Überdruck oder Unterdruck beaufschlagbar werden. In den Abzweigleitungen und in der Flüssigkeitsabführleitung kann aber auch stets der gleiche (Unter-)Druck vorliegen, oder in jenen Abzweigleitungen, die dem Abführen eines Fluid dienen, kann der gleiche (Unter-)Druck vorliegen. Das in der Flüssigkeitsabführleitung abgeführte/vorliegende Fluid kann je nach Rotationsposition des Rotationskörpers unterschiedlich sein. Z.B. kann das Fluid die aus dem Gemisch via das Filtermittel abgetrennte Flüssigkeit sein (d.h., die Filterzelle befindet sich z.B. gerade im Gemisch), und das Fluid kann z.B. ein Feuchtgas bzw. Feuchtluft sein, die beim Trocknen des Filterkuchens durch den Verbindungskanal abgesaugt wird, und das Fluid kann z.B. eine Waschflüssigkeit sein, mit welcher der am Rotationskörper anhaftende Feststoff-Filterkuchen gewaschen wird. Diese unterschiedlichen Fluide können in Abhängigkeit von der Position des Rotationskörpers gesteuert über die jeweilige Abzweigleitung gesondert/zugeordnet von der Flüssigkeitsabführleitung abgezweigt und damit abgeführt werden.

Die Ventile können in der Flüssigkeitsabführleitung in Serie und/oder parallel angeordnet sein. Die Steuereinrichtung (z.B. wenn als Drucksteuervorrichtung ausgebildet) kann zusätzlich zu der Ventileinrichtung ein Druckregelventil aufweisen, mittels dessen der Druck in der Flüssigkeitsabführleitung in Abhängigkeit von der Rotationsposition des Rotationskörpers variierbar ist und damit die Druckdifferenz zwischen der Filtermitteleingangsseite und der Filtermittelausgangsseite von der Filtermittelausgangsseite her variierbar ist.

Aufgrund der Variierbarkeit der Druckdifferenz zwischen der Filtermitteleingangsseite und der Filtermittelausgangsseite, was z.B. über die Ventileinrichtung der Steuereinrichtung mit dem einen oder den mehreren Ventilen erfolgen kann (z.B. wenn in den Abzweigleitungen jeweils ein anderer (Unter-)Druck vorliegt), kann in Abhängigkeit von der Rotationsposition des Rotationskörpers in beliebig gesteuerter Weise Einfluss auf die Druckdifferenz zwischen der Filtermitteleingangsseite und der Filtermittelausgangsseite ausgeübt werden, um dadurch das Filterergebnis z.B. im Hinblick auf eine von der Pharmaindustrie geforderte Produktqualität hin weiter optimieren zu können. Das Variieren von der Filtermittelausgangsseite her erlaubt eine gezielte Beaufschlagung der Filterzelle mit einem Unterdruck/Überdruck. Der einzelne Kanalstrang, aus Verbindungskanal, Zwischenverbindungskanal und Flüssigkeitsabführleitung, und die einzelne (einzig vorhandene) Filterzelle sind einfach zu reinigen und zu inspizieren. Die z.B. als Drucksteuervorrichtung ausgebildete Steuereinrichtung kann zusätzlich derart eingerichtet sein, dass von ihr auf der Filtermitteleingangsseite der Druck variierbar ist. Hierzu kann der Rotationskörper z.B. in einem abgedichteten Gehäuse (d.h. in einem abgedichteten Gehäuseinnenraum des Gehäuses) untergebracht sein, dessen Gehäuseinnenraum mittels einer Druckluft- und/oder Saugpumpe mit Überdruck bzw. Unterdruck beaufschlagbar ist. Die ggf. erfolgende Verwendung des Ventilregisters erlaubt zusätzlich die Abführung von unterschiedlichen Fluiden/Flüssigkeiten (z.B. durch den Filtervorgang abgetrennte Flüssigkeit aus dem Feststoff-Flüssigkeit-Gemisch, Waschflüssigkeit und/oder durch das Abtrocknen des an der Filterzelle anhaftenden Feststoffs entstehendes Feuchtgas/Feuchtluft) durch den Ventilen entsprechend zugeordnete, unterschiedliche, von der Flüssigkeitsabführleitung abgezweigte Leitungen/Abzweigleitungen. Über eine solche Abzweigleitung kann auch hoher Überdruck auf die Filtermittelausgangsseite der Filterzelle aufgebracht werden, um ein Lösen des Feststoffs vom Rotationskörper beim Feststoffaustrag zu erleichtern. Durch die kontinuierliche Drehbarkeit bzw. durch ein kontinuierliches Drehen des Rotationskörpers ist eine Produktivitätssteigerung erreichbar. Die ggf. einseitige bzw. fliegende Lagerung des Rotationskörpers reduziert Größe der Vorrichtung und Totraum für Schmutzansammlung, wobei der Rotationskörper dann leicht für Reinigungszwecke zugänglich ist, wobei der Rotationskörper ggf. auch ausbaubar ist. Eine zentrale Abführung der Flüssigkeit durch den Lagerschaft resultiert in kurzen Abführwegen, wodurch Raum für Schmutzansammlungen weiter reduziert ist.

Der Rotationskörper kann z.B. drehfest am Lagerschaft angebracht sein, d.h. mit dem Lagerschaft mitdrehbar sein. Der Lagerschaft bildet damit eine Drehwelle. In diesem Falle befinden sich keine schmutzgenerierenden Drehlagerteile im Bereich des Rotationskörpers. Der Rotationskörper kann dann schmutzgeschützter in einem Gehäuse untergebracht werden, und die Lagerung kann außerhalb des den Rotationskörper aufnehmenden Gehäuses/Gehäuseabschnitts angeordnet sein. Jedoch kann der Rotationskörper auch drehbar auf dem Lagerschaft gelagert sein. Der Lagerschaft bzw. die Drehwelle ist z.B. als Hohlschaft bzw. als Hohlwelle ausgebildet, wobei der sich durch den Hohlschaft/die Hohlwelle längs hindurch erstreckende Innenraum den Zwischenverbindungskanal ausbilden bzw. bilden kann.

Die Rotationsposition des Rotationskörpers kann z.B. mechanisch durch eine sich damit mitdrehende Steuerkurvenscheibe erfasst werden, welche Steuerkurvenscheibe z.B. Steuernocken aufweist, die mechanisch (z.B. über Stößel/Stangen) mit den Ventilen (z.B. den Ventilen des Ventilregisters) und z.B. einer sonstigen in Abhängigkeit von der Rotationsposition des Rotationskörpers betätigten Vorrichtung, wie z.B. einem Druckregler oder einer Waschvorrichtung (siehe unten), verbunden sind. Die Steuereinrichtung weist z.B. auf einen Sensor (z.B. einen optischen Sensor (z.B. einen LED-Sensor) oder einen Magnetsensor oder einen kapazitiven Sensor) zum Erfassen der Rotationsposition des Rotationskörpers und eine mit dem Sensor und den Ventilen verbundene elektronische Steuereinheit, von welcher die Ventile in Abhängigkeit von der vom Sensor erfassten Rotationsposition des Rotationskörpers zum Herstellen oder Unterbrechen der Verbindung zwischen der dem jeweiligen Ventil zugeordneten Abzweigleitung und der Flüssigkeitsabführleitung ansteuerbar sind. Im Falle der Verwendung eines solchen Sensors wird eine mögliche mechanische Signalrückführ-Verbindung zwischen den Ventilen und der Position des Rotationskörpers oder auch zwischen einer anderen in Abhängigkeit von der Rotationsposition des Rotationskörpers zu betätigenden Vorrichtung und der Position des Rotationskörpers durch eine entsprechende Einrichtung/Programmierung der elektronischen Steuereinheit ersetzt. Die elektronische Steuereinheit kann in einfacher Weise ihrerseits variiert (via Programmierungsänderung) und damit in einfacher Weise an diverse Produkte/Produktionserfordernisse angepasst werden. Die Steuereinrichtung kann anstelle von oder zusätzlich zu elektronischen Steuerkomponenten auch hydraulische oder pneumatische Steuertechniken verwenden.

Die ggf. einseitige Lagerung des Rotationskörpers in Verbindung mit dessen ggf. vorliegender Abnehmbarkeit vom Lagerschaft erlaubt eine einfache Zugänglichkeit zum Reinigen und Inspizieren bei einem Produktwechsel.

In der jeweiligen Abzweigleitung kann z.B. ein der jeweiligen Abzweigleitung zugeordneter Überdruck/Unterdruck vorliegen, so dass der Verbindungskanal, wenn die Ventileinrichtung (z.B. das jeweilige Ventil) die jeweils zugeordnete (der jeweiligen Rotationsposition des Rotationskörpers zugeordnete) Abzweigleitung mit der Flüssigkeitsabführleitung verbindet, mit dem in der Abzweigleitung vorliegenden, z.B. permanent vorliegenden, Überdruck/Unterdruck beaufschlagt wird. Ferner können damit der jeweiligen Abzweigleitung in Abhängigkeit von der Rotationsposition des Rotationskörpers die oben erläuterten, unterschiedlichen Funktionen (Gemisch-Flüssigkeitsabführung, Druckluftzufuhr, Feuchtgas-Abführung, Waschflüssigkeit-Abführung) schnell zugeordnet werden.

Die Filtervorrichtung weist z.B. ein abgedichtetes (fluiddichtes) Gehäuse (d.h. ein Gehäuse mit einem abgedichteten Gehäuseinnenraum) auf, in welchem der Rotationskörper aufgenommen ist. Die Gehäusewandung ist z.B. eine den Gehäuseinnenraum auf Seiten des Lagerschafts bzw. der (ggf. nur einseitig angeordneten) Lagerung definierende/begrenzende Gehäusewand und damit im Hinblick auf die Begrenzung des den Gehäusekörper aufnehmenden Gehäuseinnenraums eine stirnseitige Endwand des Gehäuses. Die Lagerung kann z.B. in einem von dieser Endwand des Gehäuses ausgebildeten oder daran angesetzten Topfabschnitt angeordnet sein.

Die Filtervorrichtung gemäß irgendeinem der vorausgehend beschriebenen Ausführungsbeispiele kann z.B. ferner aufweisen ein abgedichtetes Gehäuse (bei dem vorstehenden Ausführungsbeispiel mit abgedichtetem Gehäuse hat Letzteres z.B. die nachfolgenden Zusatzeigenschaften), in welchem der Rotationskörper aufgenommen ist, wobei das Gehäuse auf einer vom Lagerschaft abgewandten Axialseite eine von einem abnehmbaren Gehäusedeckel verschlossene Gehäuseöffnung aufweist, durch welche hindurch der Rotationskörper in Axialrichtung der Rotationsachse aus dem Gehäuse entnehmbar ist.

Bei der Filtervorrichtung gemäß irgendeinem der vorausgehend beschriebenen Ausführungsbeispiele kann z.B. die Filterzelle auf Seiten der Filtermittelausgangsseite eine im Rotationskörper, z.B. im Außenumfang des Rotationskörpers, ausgebildete Filtertasche aufweisen, die sich in Richtung zu dem zugehörigen Verbindungskanal verjüngt.

Bei der Filtervorrichtung gemäß irgendeinem der vorausgehend beschriebenen Ausführungsbeispiele kann z.B. der Verbindungskanal der Filterzelle einen von der Filtermittelausgangsseite aus sich senkrecht zur Rotationsachse erstreckenden ersten Kanalabschnitt und einen sich vom ersten Kanalabschnitt zu der Mündungsöffnung hin sich parallel zur Rotationsachse erstreckenden zweiten Kanalabschnitt aufweisen, oder kann z.B. der Verbindungskanal der jeweiligen Filterzelle sich von der Filtermittelausgangsseite zu seiner Mündungsöffnung hin in einem Winkel zur Rotationsachse sowie zu deren Senkrechten erstrecken.

Bei der Filtervorrichtung gemäß irgendeinem/irgendeiner der vorausgehend beschriebenen Ausführungsbeispiele/Ausführungsformen kann z.B. der Lagerschaft als drehend angetriebene Drehwelle ausgebildet sein, mit welcher der Rotationskörper drehfest verbunden ist. D.h., der Lagerschaft und der Rotationskörper sind gemeinsam drehbar gelagert und rotieren miteinander um die Rotationsachse.

Bei der Filtervorrichtung gemäß irgendeinem/irgendeiner der vorausgehend beschriebenen Ausführungsbeispiele/Ausführungsformen kann ferner z.B. der Rotationskörper über eine Schnellverschluss-Steckkupplung (z.B. einen Bajonett-Verschluss oder eine Rast/SchnappVerbindung) oder über eine Schnellverschluss-Schraubkupplung (z.B. eine Milchrohrverschraubung) mit dem Ende des Lagerschafts gekuppelt sein.

Die Zufuhr des zu filternden Flüssigkeit-Feststoff-Gemisches erfolgt z.B. kontinuierlich über einen an dem Gehäuse, in welchem der Rotationskörper aufgenommen ist, ausgebildeten Gemisch-Zufuhranschluss.

Die Erfindung wird nachfolgend anhand von Ausführungsbeispielen mit Bezug auf die Zeichnungen im Detail erläutert.

In den Zeichnungen zeigen:
Figur 1 eine schematische, geschnittene Seitenansicht einer Filtervorrichtung gemäß einer Ausführungsform der Erfindung,
Figur 2 eine schematische, geschnittene Frontansicht der Filtervorrichtung von Figur 1,
Figuren 3a und 3b schematische, teilweise geschnittene Darstellungen eines Rotationskörpers gemäß einem anderen Ausführungsbeispiel der Filtervorrichtung von Figuren 1 und 2,
Figur 4 eine schematische, geschnittene Darstellung einer Anschlussstelle zwischen einem Rotationskörper und einem Lagerschaft gemäß einem noch anderen Ausführungsbeispiel der Filtervorrichtung von Figuren 1 und 2,
Figur 5A eine schematische Darstellung einer Steuereinrichtung der Filtervorrichtung gemäß einer Ausführungsform der Erfindung und
Figuren 5B-5J verschiedene Varianten einer Ventileinrichtung der Steuereinrichtung von Figur 5A.

In den Figuren werden für gleiche oder ähnliche Bauteile die gleichen Bezugszeichen verwendet.

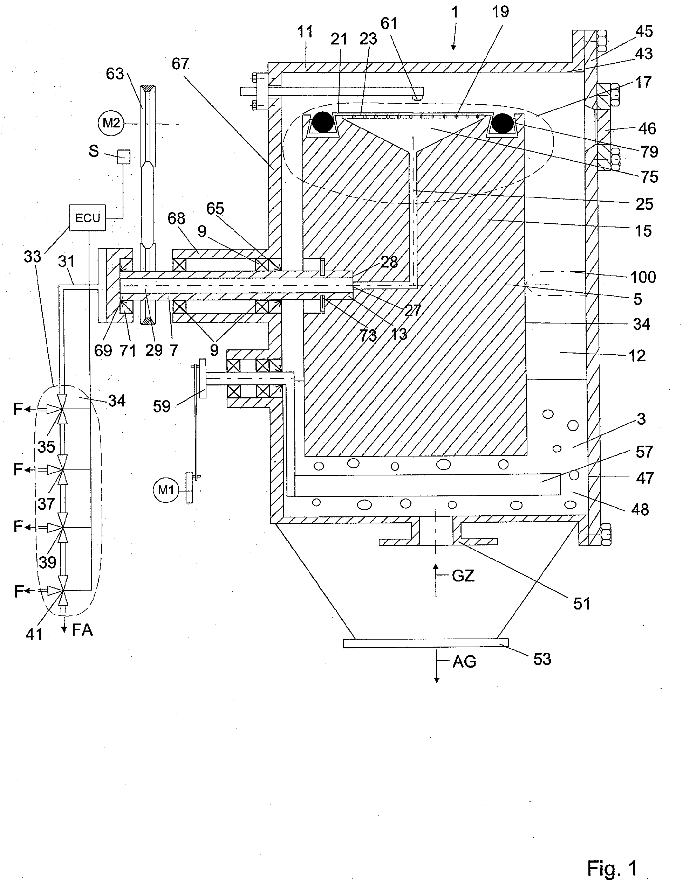

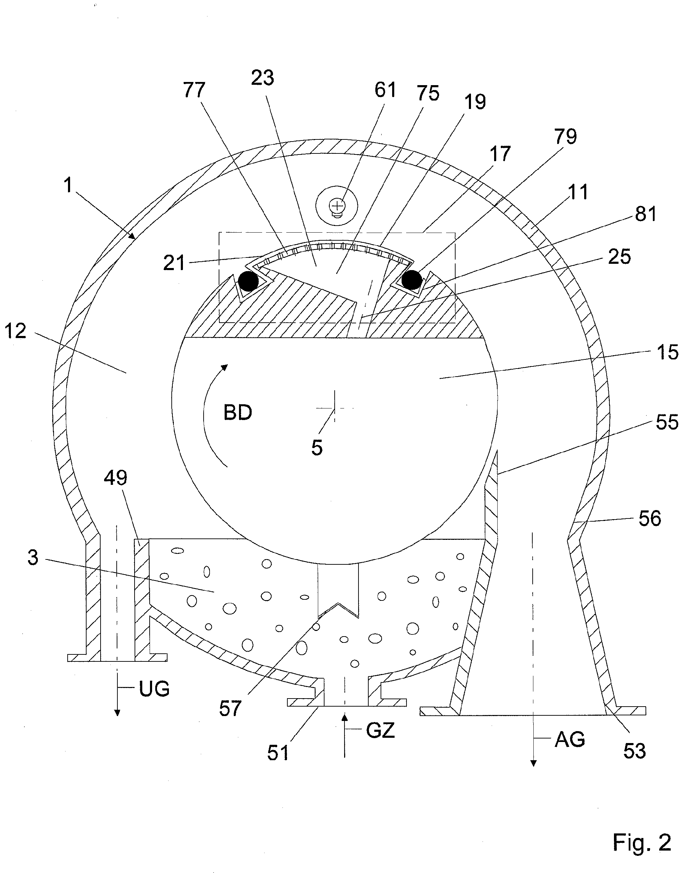

Die in den Figuren 1 und 2 dargestellte Filtervorrichtung 1 zum Ausfiltern von Feststoff aus einem Feststoff-Flüssigkeit-Gemisch 3 gemäß einer ersten exemplarischen Ausführungsform der Erfindung weist auf einen sich entlang einer Rotationsachse 5 erstreckenden Lagerschaft 7 in Form von einer von einer Rollen-Lagerung 9 (auch eine Gleitlagerung kann verwendet werden) in einem Gehäuse 11 drehbar gelagerten Hohlwelle, der ein freies Ende 13 aufweist, einen am freien Ende 13 des Lagerschafts 7 lösbar und drehfest angebrachten und somit mit dem Lagerschaft 7 um die Rotationsachse 5 mitdrehbaren sowie nur einseitig (fliegend) gelagerten Rotationskörper 15 (d.h., der Lagerschaft 7 ist entlang der Rotationsachse 5 gesehen nur auf einer Axialseite des Rotationskörpers 15 im Gehäuse 11 abgestützt bzw. gelagert), eine einzelne (einzige) Filterzelle 17, die am Rotationskörper 15 ausgebildet ist und die aufweist ein am Außenumfang des Rotationskörpers 15 angebrachtes Filtermittel 19 (z.B. in Form eines Filtertuchs) zum Ausfiltern des Feststoffs aus dem Feststoff-Flüssigkeit-Gemisch 3 unter Passieren-Lassen der Flüssigkeit des Feststoff-Flüssigkeit-Gemischs 3 von einer Filtermitteleingangsseite 21 zu einer Filtermittelausgangsseite 23 und einen Verbindungskanal 25, der im Rotationskörper 15 ausgebildet ist und sich von der Filtermittelausgangsseite 23 aus erstreckt und in einer in der Rotationsachse 5 liegenden Mündungsöffnung 27 ausmündet, die an den Lagerschaft 7 stirnseitig angrenzend ausgebildet ist (in dieser Ausführungsform grenzt die Mündungsöffnung 27 an das am freien Ende 13 des Lagerschafts vorliegende Stirnende 28 des Lagerschafts 7 an (unter Ausbildung einer fluiddichten Verbindung zwischen dem Verbindungskanal 25 und dem Zwischenverbindungskanal 29) und fluchtet zu der Rotationsachse 5 und damit zu dem im Lagerschaft 7 ausgebildeten Längshohlraum) und über welche der Verbindungskanal 25 unabhängig von der Rotationsposition des Rotationskörpers 15 stets mit einem sich im Lagerschaft 7 ausgebildeten Zwischenverbindungskanal 29 verbunden ist (welcher vom Längshohlraum des als Hohlwelle ausgebildeten Lagerschafts 7 gebildet ist), eine Flüssigkeitsabführleitung 31, die mit dem Zwischenverbindungskanal 29 verbunden ist, eine Mehrzahl von Abzweigleitungen F, die jeweils von der Flüssigkeitsabführleitung 31 ausgehend von dieser abgezweigt sind (in dieser Ausführungsform nacheinander abgezweigt sind), und eine Steuereinrichtung 33 mit einer Ventileinrichtung 34, welche in diesem Ausführungsbeispiel eine Mehrzahl von Ventilen 35, 37, 38, 41 aufweist und welche mit ihren Ventilen 35, 37, 38, 41 (unmittelbar) an der Flüssigkeitsabführungsleitung 31 angeordnet ist und zwischen die Flüssigkeitsabführleitung 31 und die Abzweigleitungen F geschaltet ist und über welche die Abzweigleitungen F in Abhängigkeit von der Rotationsposition des Rotationskörpers 15 in gesteuerter Weise, z.B. selektiv, mit der Flüssigkeitsabführleitung 31 verbindbar ist bzw. verbunden werden.

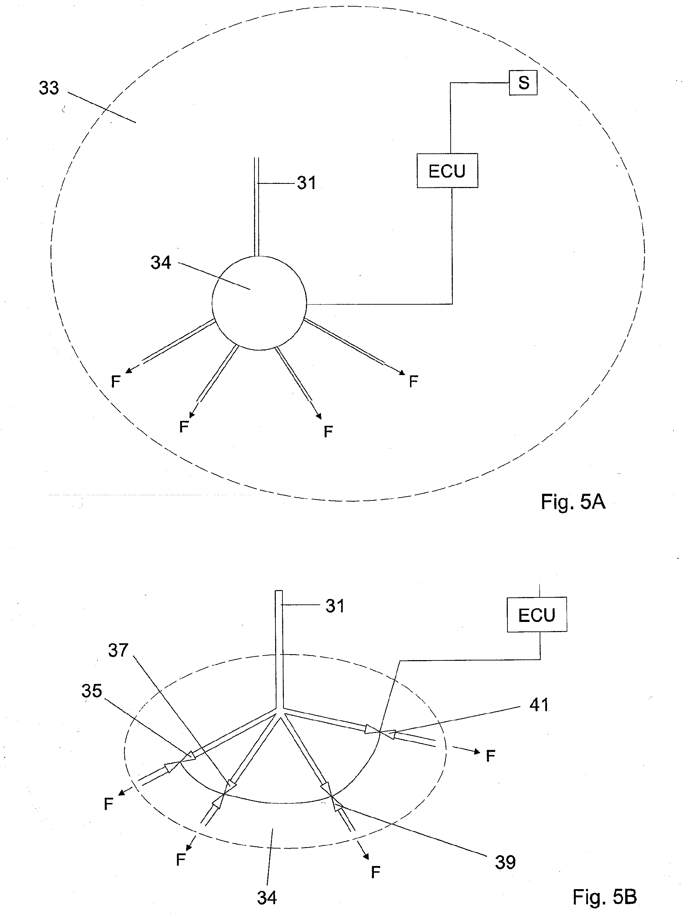

Figur 5A zeigt die Ventileinrichtung 34 schematisch in allgemeinerer Form. Weitere Varianten der Ventileinrichtung 34 werden weiter unten mit Bezugnahme auf z.B. die Figuren 5B-5J erläutert.

Die Steuereinrichtung 33 kann z.B. als Drucksteuervorrichtung ausgebildet sein oder eine Drucksteuervorrichtung aufweisen, von welcher eine Druckdifferenz zwischen der Filtermittelausgangsseite 23 und der Filtermitteleingangsseite 21 in Abhängigkeit von der Rotationsposition des Rotationskörpers 15 von der Filtermittelausgangsseite 23 her variierbar ist.

Der Rotationskörper 15 hat eine zylindertrommelförmige, z.B. eine kreiszylindertrommelförmige, Gestalt, wobei die Zylinderachse konzentrisch zur Rotationsachse 5 verlaufend angeordnet ist.

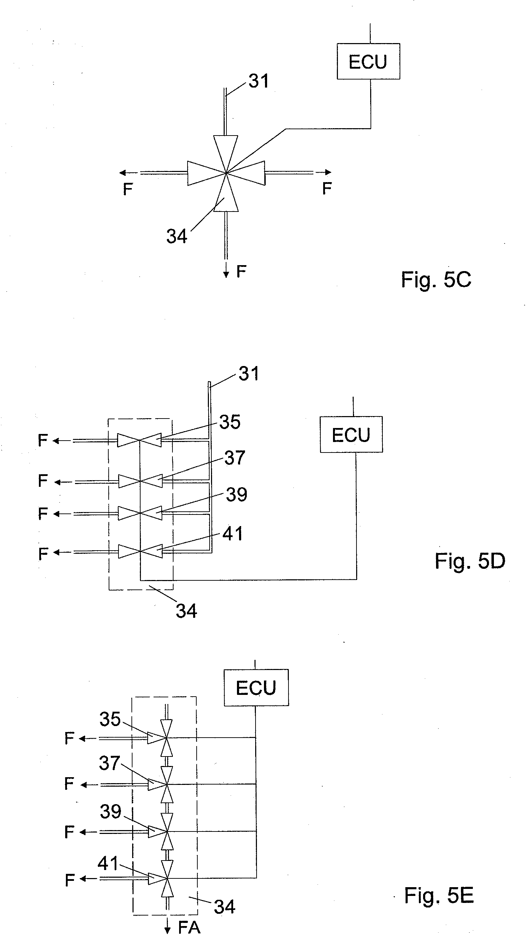

Die Mehrzahl von Ventilen 35, 37, 39, 41 der Ventileinrichtung 34 bildet in diesem Ausführungsbeispiel ein Ventilregister oder eine Ventilinsel. Die Ventile 35, 37, 39, 41 sind in Serie in der Flüssigkeitsabführleitung 31 angeordnet sind, wobei die Ventile 35, 37, 39, 41 auch parallel in der Flüssigkeitsabführleitung 31 (siehe z.B. Figuren 5B und 5D) angeordnet sein können, und wobei auch eine Kombination von parallel und in Serie geschalteten Ventilen vorgesehen sein kann.

Über das jeweilige Ventil 35, 37, 39, 41 ist eine dem jeweiligen Ventil 35, 37, 39, 41 jeweils zugeordnete Abzweigleitung F von der Flüssigkeitsabführleitung 31 abgezweigt, wobei die Abzweigleitungen F damit in gesteuerter Weise, z.B. selektiv, über die Ventile 35, 37, 39, 41 mit der Flüssigkeitsabführleitung 31 in Fluidverbindung bringbar sind. Damit kann die Flüssigkeitsabführleitung 31 (und über diese die Filtermittelausgangsseite 23) über die diversen Abzweigleitungen F z.B. auch in gesteuerter Weise, z.B. selektiv, mit unterschiedlichen Drücken/Unterdrücken (die z.B. permanent in der jeweiligen Abzweigleitung F mit einer bestimmten Größe vorliegen) beaufschlagt werden, um dadurch eine Druckdifferenz zwischen der Filtermitteleingangsseite 21 und der Filtermittelausgangsseite 23 gezielt gesteuert herzustellen.

Die Steuereinrichtung 33 weist ferner auf einen ein elektrisches Rotationspositionssignal erzeugenden Rotationspositionssensor S, von welchem die Rotationsposition des Rotationskörpers 15 erfassbar ist bzw. erfasst wird, und eine elektronische Steuereinheit ECU, die mit dem Rotationspositionssensor und den Ventilen 35, 37, 39, 41 (elektrisch) verbunden ist, um die Ventile 35, 37, 39, 41 in Abhängigkeit von den vom Rotationspositionssensor erhaltenen Rotationspositionssignalen (und damit in Abhängigkeit von der Rotationsposition des Rotationskörpers 15) anzusteuern zum Herstellen oder Unterbrechen der Verbindung der zugehörigen Abzweigleitung F mit der Flüssigkeitsabführleitung 31 in Abhängigkeit von der Rotationsposition des Rotationskörpers 15.

In der jeweiligen Abzweigleitung F liegt zum Beispiel stets ein (z.B. gegenüber der Filtermitteleingangsseite 21) vorbestimmter Unterdruck oder Überdruck vor, so dass bei Herstellen einer Verbindung zwischen der jeweiligen Abzweigleitung F und der Flüssigkeitsabführleitung 31 der zugehörige Überdruck oder Unterdruck relativ schnell auf die Filtermittelausgangsseite 23 aufgebracht wird/ist.

Zusätzlich zu der oben beschriebenen Ventileinrichtung 34 mit mehreren Ventilen 35, 37, 39, 41 (Ventilregister) kann die Steuereinrichtung 33 auch eine Druckregelvorrichtung (z.B. ein Druckregelventil) zum kontinuierlichen oder diskreten Einstellen des Drucks/Unterdrucks (in Abhängigkeit von der Rotationsposition des Rotationskörpers) in der Flüssigkeitsabführleitung 31 aufweisen.

Die Steuereinrichtung 33 kann ferner auch eine Gehäuseinnenraum-Drucksteuervorrichtung aufweisen, mittels welcher der den Rotationskörper 15 aufnehmende Gehäuseinnenraum 12 des Gehäuses 11 gesteuert mit Überdruck bzw. Unterdruck beaufschlagbar ist, um dadurch die Druckdifferenz zwischen Filtermitteleingangsseite 21 und Filtermittelausgangsseite 23 auch von der Filtermitteleingangseite 21 her einstellen zu können.

Das Gehäuse 11 nimmt den Rotationskörper 15 komplett auf (d.h., der Rotationskörper ist vom Gehäuse 11 vollständig umschlossen und damit in dessen Gehäuseinnenraum 12 aufgenommen, z.B. abgedichtet bzw. fluiddicht aufgenommen) und hat z.B. eine zu der Außenumlaufbahn des Rotationskörpers 15 konforme Zylindertrommelgestalt und weist in Richtung der Rotationsachse 5 gesehen auf der von dem Lagerschaft 7 bzw. von der Lagerung 9 abgewandten Axialseite des Rotationskörpers 15 eine Öffnung 43 sowie einen die Öffnung 43 (fluid)dicht verschließenden, abnehmbaren Gehäusedeckel 45 auf. Die Öffnung 43 erstreckt sich mit ihrer Öffnungsfläche in etwa senkrecht zur Rotationsachse 5, wobei sie z.B. in etwa konzentrisch zur Rotationsachse 5 ausgebildet ist. Die Öffnung 43 ist in Richtung der Rotationsachse 5 fluchtend zum Rotationskörper 15 angeordnet und hat eine derartige Weite, dass der Rotationskörper 15 axial in Richtung bzw. entlang der Rotationsachse 5 durch die Öffnung 43 hindurch aus dem Gehäuse 11 entnehmbar ist, wenn der Gehäusedeckel 45 abgenommen ist. Im Gehäusedeckel 45 ist ferner ein Sicht-/Inspizier-Fenster 46 ausgebildet, welches mit einer optischen Sichtvergrößerungslinse ausgestattet sein kann.

Der untere Gehäuseabschnitt 47 des Gehäuses 11 bildet bzw. stellt eine Wanne zur Aufnahme des Feststoff-Flüssigkeit-Gemisches 3 aus/dar. Der Füllstand/Pegel des Feststoff-Flüssigkeit-Gemisches 3 ist durch einen Überlauf/Überlaufstutzen 49 auf ein Maximum begrenzt. Überschüssiges Gemisch 3 läuft in Richtung des Pfeils UG ab und wird z.B. über einen nicht dargestellten Pumpkreislauf durch einen Gemisch-Zuführanschluss 51 wieder dem unteren Gehäuseabschnitt 47 zugeführt (z.B. in kontinuierlicher Weise). Der Überlauf kann mit einem auswechselbaren Adapterstück versehen sein (z.B. einem Adapterrohrstück), wobei Adapterstücke unterschiedlicher Rohrlänge selektiv einsetzbar sind, um den Füllstand entsprechend der Adapterrohrstücklänge einzustellen. Der Pegel des Gemisches 3 wird in jedem Falle so eingestellt, dass die Außenumlaufbahn des Rotationskörpers 15 durch das Gemisch 3 hindurch verläuft, um damit die Filterzelle 17 im Rahmen der Rotation des Rotationskörpers 15 in durch die Rotationsgeschwindigkeit und den Außenumfang bestimmten Zeitintervallen und damit quasikontinuierlich durch das Feststoff-Flüssigkeit-Gemisch 15 hindurchführen zu können bzw. hindurchzuführen.

Am unteren Gehäuseabschnitt 47 ist der Gemisch- oder Suspensions-Zuführanschluss 51 (z.B. in Form eines Anschlussstutzens oder Anschlussflanschs) ausgebildet, über welchen zu filterndes Feststoff-Flüssigkeits-Gemisch dem Gehäuse 11 kontinuierlich zuführbar ist bzw. kontinuierlich zugeführt wird (Pfeil GZ (Gemisch-Zufuhr)). Im vorliegenden Ausführungsbeispiel erstreckt sich der Suspensions-Zuführanschluss 51 von einem Außenumfang aus radial, diametrisch nach innen in Richtung zu der Rotationsachse 5.

Am Außenumfang des Gehäuses 11 ist ferner eine Feststoff-Austragöffnung 53 ausgebildet, die in eine Richtung tangential zur Außenumlaufbahn des Rotationskörpers 15 weist und durch welche aus dem Feststoff-Flüssigkeit-Gemisch 3 ausgefilterter Feststoff aus der Filtervorrichtung 1 abführbar bzw. austragbar ist (Pfeil AG (Feststoff-Austrag)). Stromaufwärts der Austragöffnung 53 ist ein Schaber 55 am Gehäuse 11 angeordnet, welcher, z.B. mittels einer Schabekante, in kleinem Abstand zum Außenumfang bzw. zur Außenumlaufbahn des Rotationskörpers 15 angeordnet ist, um den Feststoff, der als Filterkuchen auf dem Rotationskörper 15 bzw. auf dessen Außenumfang anhaftet, vom Rotationskörper 15 abzuschaben bzw. abzustreifen, so dass der Feststoff in einen der AustragÖffnung 53 vorgeschalteten, im Gehäuse 11 ausgebildeten Austragschacht oder Austragkanal 56 fällt.

Die Filtervorrichtung 1 ist ferner mit einer Gemisch- oder Suspensions-Rührvorrichtung mit einem automatisch hin und her bewegbaren Rührarm 57 ausgestattet, welcher in dieser Ausführform von einem via Elektromotor M1 angetriebenen Kurbeltrieb 59 angetrieben ist.

Die Filtervorrichtung 1 weist ferner eine Waschvorrichtung mit einer oder mehreren Waschdüsen 61 auf, welche benachbart zur Außenumlaufbahn des Rotationskörpers 15 angeordnet ist/sind und ansteuerbar ist/sind, um in gesteuerter Weise, z.B. selektiv, auf den im Bereich der Filterzelle 17 am Außenumfang des Rotationskörpers 15 anhaftenden Feststoff (Feststoff-Filterkuchen) eine Waschflüssigkeit sprühen zu können. Die Waschdüse/n 61 ist/sind mit der nicht dargestellten elektronischen Steuereinheit verbunden, welche die Waschdüsen in Abhängigkeit von der von dem Rotationspositionsdetektor detektierten Rotationsposition des Rotationskörpers 15 ansteuern/betätigen zu können. Um zu verhindern, dass Waschflüssigkeit in das Gemisch 3 gelangt, können benachbart zu den Waschdüsen 61 und benachbart zur Außenumlaufbahn des Rotorkörpers 15 (nicht dargestellte) Auffangwannen angeordnet sein, über welche Waschflüssigkeit, die den am Filtermittel 19 anhaftenden Feststoff(-Filterkuchen) nicht erreicht oder davon wegspritzt, aufgefangen und über entsprechende Leitungen abführbar ist.

Der als Drehwelle ausgebildete Lagerschaft 7 wird mittels eines via Elektromotor M2 angetriebenen Getriebes 63 (hier in Form eines Riemengetriebes) drehend angetrieben. Anstelle des Riementriebs kann jegliche andere Art von Getriebe, wie Zahnradgetriebe, Kettengetriebe, Reibradgetriebe etc., vorgesehen sein. Der Lagerschaft 7 ist mittels einer Wellendichtung 65 (z.B. einem Simmerring) gegen eine Gehäusewandung 67 hin abgedichtet, welche den den Rotationskörper 15 aufnehmenden Gehäuseinnenraum 12 auf Seiten des Lagerschafts 7 bzw. der Lagerung 9 definiert/begrenzt. Die Lagerung 9 weist zwei entlang der Rotationsachse 5 im Abstand voneinander angeordnete Lager auf, und die Lagerung 9 ist in einem sich von der Gehäusewandung 67 aus vom Rotationskörper 15 wegerstreckenden Gehäusetopf 68 angeordnet, der mit der Gehäusewandung 67 einstückig ausgebildet ist, wobei der Gehäusetopf 68 auch separat von dem den Rotationskörper 15 aufnehmenden Gehäuse 11 ausgebildet sein kann. Ferner ist der mit seinem Innenraum den Zwischenverbindungskanal 29 definierende Lagerschaft 7 an seinem anderen Längsende 69 mit einer Wellendichtung 71 gegen das Gehäuse 11 abgedichtet. An diesem anderen Längsende 69 ist auch die Flüssigkeitsrückführleitung 31 an den Lagerschaft 7 bzw. an den darin ausgebildeten Zwischenverbindungskanal 29 angeschlossen.

Der Rotationskörper 15 ist z.B. abnehmbar am Lagerschaft 7 ausgebildet, wobei die Kupplung zwischen dem Rotationskörper 15 und dem Lagerschaft 7 an dem der Gehäuseöffnung 43 zugewandten freien Ende 13 z.B. über eine Schnellverschluss-Kupplung 73, wie z.B. einen Bajonett-Verschluss, eine Milchrohrkupplung, eine Raststeckverbindung, etc., erfolgt.

Die einzelne bzw. einzige am Rotationskörper 15 vorgesehene Filterzelle 17 weist auf der Filtermittelausgangsseite 23 eine in dem Außenumfang des Rotationskörpers 15 ausgebildete Filtertasche 75 auf, welche in Betriebsdrehrichtung (Pfeil BD) des Rotationskörpers 15 in dessen Umfangsrichtung mit zunehmender radialer Taschentiefe ausgebildet ist, wobei an der tiefsten Taschenstelle der Filtertasche 75, der Verbindungskanal 25 aus der Filtertasche 75 ausmündet. Im Querschnitt parallel zur Rotationsachse 5 hat die Filtertasche 75 eine sich in Richtung zu dem Verbindungskanal 25 hin verjüngende Trichterform. Auf der Filtertasche 75 ist eine deren Radialöffnung abdeckende, perforierte Stützplatte 77 (Filtermittelabstützung) angeordnet, entlang deren radialer Außenseite sich das Filtermittel 19 erstreckt. In dieser Ausführungsform ist das Filtermittel 19 ein auswechselbares, flexibles Sieb, z.B. ein Siebtuch, welches sich über die Filtertasche 75 erstreckt und mittels einer sich um die Filtertasche 75 bzw. um deren radiale Eintrittsöffnung herum erstreckenden Halteschnur 79, z.B. einer elastischen Halteschnur 79, am Rotationskörper 15 gehalten ist. Die Halteschnur 79 greift in eine im Außenumfang des Rotationskörpers 15 ausgebildete und sich um die Filtertasche 75 herum erstreckende Aussparung/Nut 81 ein. Die Filterzelle 17 erstreckt sich am Außenumfang des Rotationskörpers in Richtung der Rotationachse 5 gesehen in etwa über den größten Teil der Breite/Höhe des Rotationskörpers 15/der Zylindergestalt des Rotationskörpers 15.

Der Betrieb der Filtervorrichtung 1 ist z.B. wie folgt. Der zylindertrommelförmige Rotationskörper 15 wird in der Betriebsdrehrichtung (Pfeil BD) mit dem drehend angetriebenen Lagerschaft 7 mitgedreht, wodurch die Filterzelle 1 in regelmäßigen (oder bei sich ändernder Drehzahl in entsprechend unregelmäßigen) Zeitintervallen und damit quasikontinuierlich das im unteren Gehäuseabschnitt 47 aufgenommene Feststoff-Flüssigkeit-Gemisch 3 durchläuft, welches über den Suspension-/Gemisch-Zuführanschluss 51, z.B. kontinuierlich, mit zu filterndem Feststoff-Flüssigkeit-Gemisch 3 versorgt wird.

In einem Betriebszustand, in welchem die Filterzelle 17 in das Gemisch 3 eingetaucht ist, sind z.B. die Ventile 35, 37, 39, 41 geschlossen, so dass die daran angeschlossenen Abzweigleitungen F nicht in Verbindung mit der Flüssigkeitsabführleitung 31 sind. In der Flüssigkeitsabführleitung 31 kann z.B. über eine daran angeschlossene Flüssigkeitsabsaugleitung (Pfeil FA), die mit einer Saugpumpe verbunden ist, eine starker Unterdruck eingestellt sein, aufgrund dessen die Flüssigkeit aus dem Gemisch 3 durch die Filterzelle 17 hindurch eingesaugt und über eine Flüssigkeitsabsaugleitung (Pfeil FA) bzw. über die Flüssigkeitsabführleitung 31 abgeführt wird. Hierdurch bleibt am Filtermittel 19 Feststoff aus dem Gemisch 3 anhaften, wobei die Filterwirkung durch die Einstellung des Unterdrucks auf der Filtermittelausgangsseite 23 (z.B. durch Betätigung der Ventile 35, 37, 39, 41 und/oder durch Steuerung der Saugpumpe) von der Filtermittelausgangsseite 21 her einstellbar ist.

Wenn die Filterzelle 17 das Gemisch 3 verlässt, kann z.B. mittels des Ventils 41 und/oder eines der anderen Ventile 35, 37 und 39 einer oder mehrere Unterdrücke in gesteuerter Weise, z.B. selektiv, an die Filtermittelausgangsseite 23 angelegt werden (wobei die Flüssigkeitsabsaugleitung FA von der Flüssigkeitsabführleitung abgetrennt werden kann), um z.B. zu Entfeuchten, wobei das angesaugte feuchte Gas dann z.B. auch über eine zugeordnete Abzweigleitung F absaugbar ist, die von der Flüssigkeitsabsaugleitung FA verschieden ist. Das korrekte Ansteuern/Betätigen der Ventile 35, 37, 39, 41 wird von der Steuereinrichtung 33 in Abhängigkeit von der vom Rotationspositionssensor S detektierten Rotationsposition des Rotationskörpers 15 durchgeführt.

Wenn die Filterzelle 17 die Waschdüse 61 erreicht, dann werden die Ventile 35, 37, 39, 41 z.B. derart betätigt, dass die den Filterkuchen durchdringende Waschflüssigkeit über erneut eine andere Abzweigleitung F abgesaugt wird.

Schließlich kann z.B. an einer Abzweigleitung F der Ventile, z.B. am Ventil 35, stets auch starker Überdruck vorliegen. Diese via das Ventil 35 schaltbare Überdruck-Abzweigleitung F kann z.B. dann mit der Flüssigkeitsabführleitung 31 verbunden werden, wenn die Filterzelle 17 kurz vor dem Schaber 55 angekommen ist, um dann einen z.B. kurzen Überdruck-Impuls auf die Flüssigkeitsabführleitung 31 und damit auf die Filtermittelausgangsseite 23 auszuüben, um damit den an der Außenseite des Filtermittels 19 anhaftenden Feststoff-Filterkuchen abzusprengen.

Mittels des ein oder der mehrere Ventile umfassenden Ventilregisters der Steuereinrichtung 33 kann daher in Abhängigkeit von der Rotationsposition des Rotationskörpers 15 in beliebig gesteuerter Weise Fluid vom Verbindungskanal 25 abgeführt werden und z.B. Einfluss auf die Druckdifferenz zwischen der Filtermitteleingangsseite 21 und der Filtermittelausgangsseite 23 von der Filtermittelausgangsseite 23 her ausgeübt werden, um dadurch das Filterergebnis z.B. im Hinblick auf eine von der Pharmaindustrie geforderte Produktqualität hin optimieren zu können. Durch die kontinuierliche Drehung des Rotationskörpers 15 wird eine Produktivitätssteigerung erreicht. Die ggf. einseitige bzw. fliegende Lagerung des Rotationskörpers reduziert Größe der Vorrichtung und Totraum für Schmutzansammlung. Außerdem ist der Rotationskörper leicht für Reinigungszwecke zugänglich und ggf. auch ausbaubar. Die zentrale Abführung der Flüssigkeit durch den Lagerschaft resultiert in kurzen Abführwegen, wodurch Raum für Schmutzansammlungen weiter reduziert ist.

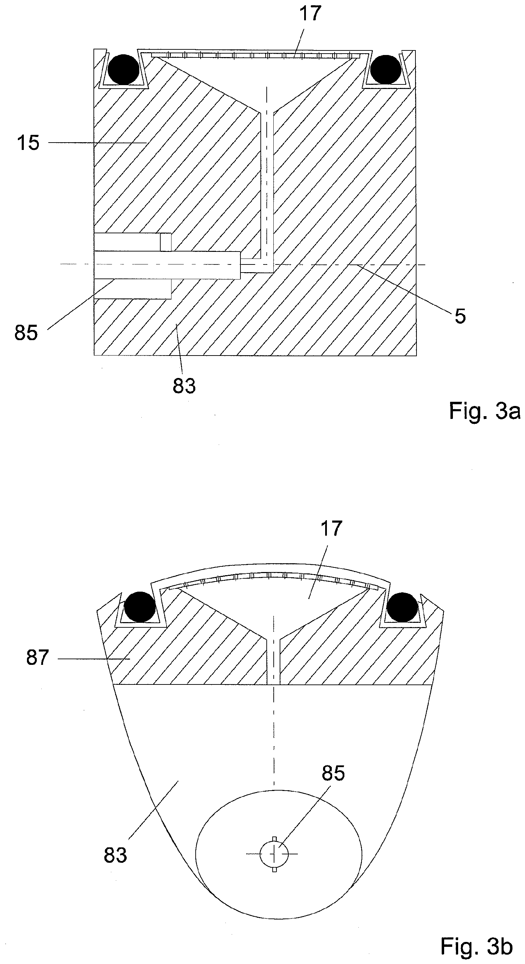

In den Figuren 3a und 3b ist ein Rotationskörper 15 gemäß einem zu dem trommelförmigen Rotationskörper 15 von Figuren 1 und 2 alternativen Ausführungsbeispiel dargestellt. D.h., der Rotationskörper 15 von Figuren 3a und 3b kann z.B. in der Filtervorrichtung 1 von Figuren 1 und 2 entsprechend eingesetzt werden.

Der Rotationskörper 15 von Figuren 3a und 3b ist ebenfalls ein Einzelfilterzellen-Rotationskörper mit einer einzigen Filterzelle 17, die im Außenumfang des Rotationskörpers 15 ausgebildet ist und die in ihrem Aufbau jener Filterzelle 17 des Rotationskörpers 15 von Figuren 1 und 2 entspricht.

Im Unterschied zum Rotationskörper 15 von Figuren 1 und 2 ist der Rotationskörper 15 gemäß dem Ausführungsbeispiel von Figuren 3a und 3b jedoch kein zylinderförmiger Trommelkörper, sondern ein zylindersegmentförmiger Körper und damit ein Körper, der eine bezüglich der Rotationsachse 5 radiale Längserstreckung hat, wobei an einem Längsendabschnitt 83 des Rotationskörpers 15 die Anschlussstelle 85 zum Anschluss an den Lagerschaft 7 ausgebildet ist und wobei am anderen Längsendabschnitt 87 die Filterzelle 17 ausgebildet ist.

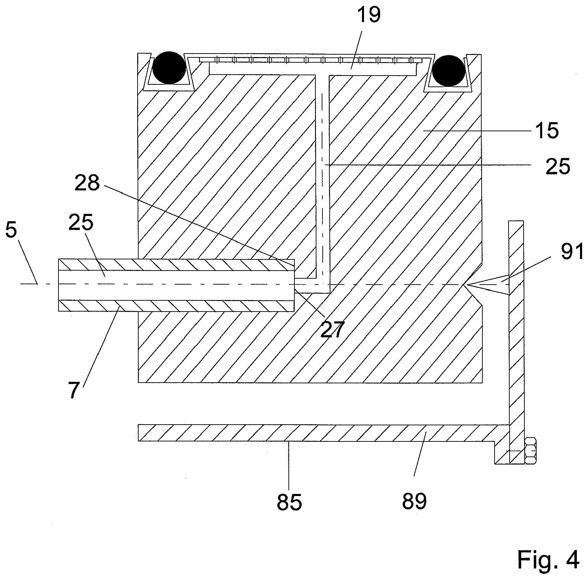

In Figur 4 ist ein weiteres Ausführungsbeispiel einer Anschlussstelle 85 zwischen einem Rotationskörper 15 und einem Lagerschaft 7 dargestellt. Der Rotationskörper kann z.B. entsprechend dem Rotationskörper 15 von Figuren 1 und 2 als zylinderförmiger Trommelkörper oder entsprechend dem Rotationskörper 15 von Figuren 3a und 3b in einer Zylindersegmentform ausgebildet sein, wobei der Rotationskörper 15 gemäß Figur 4 wiederum ein Einzelfilterzellen-Rotationskörper mit nur einer Filterzelle 17 ist. Im Unterschied zu den Rotationskörpern 15 von Figuren 1, 2, 3a und 3b, bei denen sich der Lagerschaft 7 entlang der Rotationsachse 5 gesehen nicht axial über den Rotationskörper 15 hinaus erstreckt, weist der Lagerschaft 7 gemäß der Ausführungsform von Figur 4 einen sich durch den Rotationskörper 15 axial hindurch oder an diesem vorbei erstreckenden Schaftabschnitt 89 (z.B. in Form eines Bügels) auf, der sich auf die von der Lagerschaft-Drehlagerung 9 (vgl. Figur 1) abgewandte Axialseite des Rotationskörpers 15 erstreckt.

An dem Schaftabschnitt 89 ist ein sich axial in Richtung zu dem Rotationskörper 15 hin erstreckender Haltedorn oder Haltestift 91 angeordnet, welcher sich konzentrisch zur Rotationsachse 5 erstreckt und den Rotationskörper 15 zwischen sich und dem freien Stirnende 28 des Lagerschafts 7 einklemmt unter Herstellung einer (fluid)dichten Verbindung zwischen dem Zwischenverbindungskanal 29 im Lagerschaft 7 und dem Verbindungskanal 25 im Rotationskörper 15, und zwar durch planes Aufeinanderpressen des freien Stirnendes 28 des Lagerschafts und der Mündungsöffnung 27 (bzw. einer dem Lagerschaft 7 zugewandten axialen Endfläche der Radialbegrenzungswand der Mündungsöffnung 27) des Verbindungskanals 25. Der Rotationskörper 15 von Figur 4 ist jedoch trotz seiner beidseitigen Einspannung nur auf einer Seite von der Lagerung 9 im Gehäuse 11 gelagert und ist damit fliegend gelagert.

In den obigen Ausführungsbeispielen wurde der Rotationskörper 15 als einseitig gelagerter Rotationskörper 15 beschrieben. In Figur 1 ist in Punkt-Strich-Linie eine Variante eingezeichnet, wonach der Rotationskörper 15 auch über ein Hilfslager oder Stützlager 100 auf seiner von der Lagerung 9 abgewandten Axialseite (bezüglich der Rotationsachse 5) drehbar gehalten ist. Das Hilfslager 100 ist in dieser Ausführungsform am Gehäusedeckel 45 angebracht, sodass es mit Abnehmen des Gehäusedeckels 45 automatisch vom Rotationskörper 15 abgenommen wird.

Figur 5A zeigt allgemein eine mögliche Steuereinrichtung 33 wie sie in den oben beschriebenen Ausführungsformen der Filtervorrichtung 1 einsetzbar ist und welche eine an die Flüssigkeitsabführleitung 31 unmittelbar bzw. direkt angeschlossene Ventileinrichtung 34, eine Steuervorrichtung ECU und einen die Rotationsposition des Rotationskörpers detektierenden Sensor S bzw. Detektor hat, wobei die Ventileinrichtung 34, die Steuervorrichtung ECU und der Sensor elektrisch miteinander verbunden sind. Über die Ventileinrichtung 34 sind die Abzweigleitungen F von der Flüssigkeitsabführleitung 31 abgezweigt, um - wie oben erläutert - die gesonderte Abfuhr von in der Flüssigkeitsabführleitung 31 vorliegendem Fluid in Abhängigkeit von der Rotationsposition des Rotationskörpers zu erlauben.

Bei der in Figur 5B gezeigten Variante der Ventileinrichtung 34 gehen von der Flüssigkeitsabführleitung 31 parallel Leitungsansätze von derselben Stelle aus, in welchen jeweils ein Ventil 35, 37, 39, 41 angeordnet ist, die mit der elektronischen Steuervorrichtung ECU verbunden sind. Die Funktionsweise dieser Ventile 35, 37, 39, 41 kann ansonsten wie jene in Verbindung mit der Ausführungsform von Figur 1 beschriebene Funktionsweise sein.

Bei der in Figur 5C gezeigten Variante der Ventileinrichtung 34 ist letztere in Form eines Mehr-Wege-Ventils (hier in Form eines 3-Wege-Ventils) ausgebildet, welches unmittelbar in die Flüssigkeitsabführleitung 31 eingebaut ist bzw. daran anschließt und über welches mehrere (hier drei) Abzweigleitungen F von der Flüssigkeitsabführleitung 31 abgezweigt sind, wobei die Abzweigleitungen F entsprechend der oben beschriebenen Funktionsweise der Ventileinrichtung 34 in Abhängigkeit von der Rotationsposition des Rotationskörpers gesteuert mit der Flüssigkeitsabführleitung 31 in Fluidverbindung bringbar sind bzw. gebracht werden.

Bei der in Figur 5D gezeigten Variante der Ventileinrichtung 34 sind an der Flüssigkeitsabführleitung 31 Abzweigansätze in paralleler Weise ausgebildet, in denen sich jeweils ein Ventil 35, 37, 38, 41 befindet, welches mit der Steuervorrichtung ECU verbunden ist. Im Gegensatz zu der in Figur 5B gezeigten Variante sind die Abzweigansätze nicht vom selben Punkt der Flüssigkeitsabführleitung 31 aus abgezweigt, sondern von sukzessive entlang der Flüssigkeitsabführleitung 31 vorgesehenen Punkten/Stellen aus. Die Funktionsweise der Ventileinrichtung 34 kann wiederum wie oben erläutert sein.

Die in Figur 5E gezeigte Variante der Ventileinrichtung 34 entspricht der in Figur 1 gezeigten Variante, sodass auf die entsprechende obige Beschreibung davon verwiesen wird.

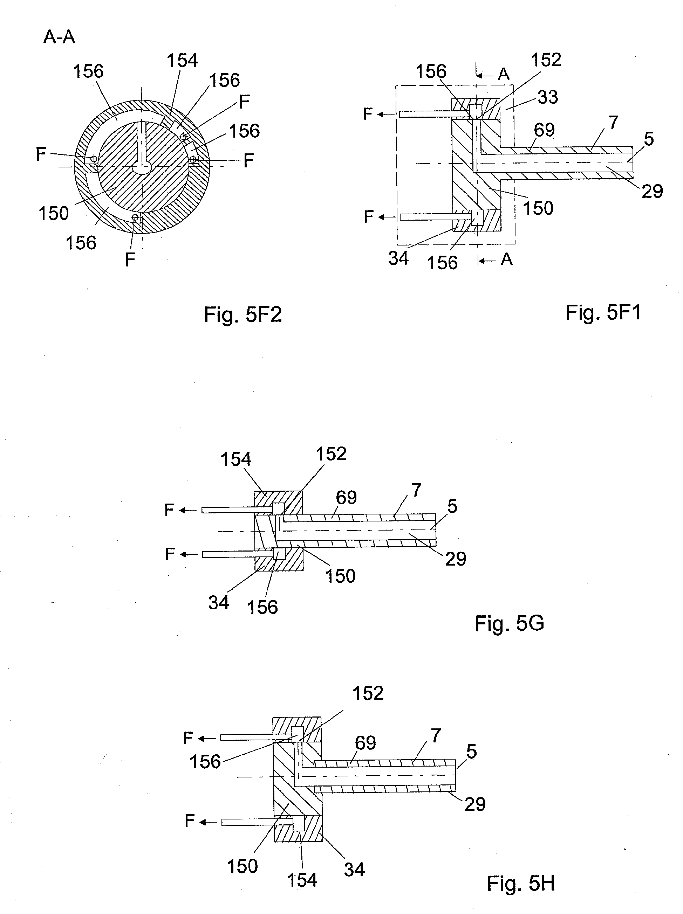

Die Figuren 5F-5J zeigen noch andere Varianten der Ventileinrichtung 34 bzw. der Steuereinrichtung 33, bei denen die gesteuerte, z.B. selektive, Verbindung der Abzweigleitungen F in Abhängigkeit von der Rotationsposition des Rotationskörpers nicht via elektronische Steuerung, sondern via mechanische Steuerung erfolgt. In den Varianten der Figuren 5F-5J wird die Flüssigkeitsabführleitung 31 vom Zwischenverbindungskanal 29 ausgebildet, d.h., die Flüssigkeitsabführleitung 31 und der Zwischenverbindungskanal 29 sind zueinander identische Leitungen bzw. Kanäle. Die Ventileinrichtung 34 der Steuereinrichtung 33 ist hier als eine mechanische Steuerbaueinheit ausgebildet und weist auf eine mit dem (hier drehbar gelagerten) Lagerschaft 7 mitdrehende Dichtscheibe 150, in welcher eine bezüglich der Rotationsachse 5 exzentrisch angeordnete bzw. exzentrisch ausmündende Durchgangsöffnung 152 ausgebildet ist, die (stets) in Fluidverbindung mit dem Zwischenverbindungskanal 29 steht, und einer stationären Steuerscheibe 154, die mit der Dichtscheibe 150 in einem fluiddichten Gleitrotationseingriff steht und in welcher Steueröffnungen 156 ausgebildet sind, die in Abhängigkeit von der Rotation des Lagerschafts 7 (und damit des Rotationskörpers) und damit der Dichtscheibe 152 in gesteuerter Weise (sukzessive wiederholt) mit der Durchgangsöffnung 152 (bzw. mit deren bzgl. der Rotationsachse 5 exzentrisch angeordneter Ausmündung) in Verbindung gebracht werden und an die die Abzweigleitungen F angeschlossen sind, wodurch die Steueröffnungen 156 und die daran angeschlossenen Abzweigleitungen F in Abhängigkeit von der Rotationsposition des Rotationsköpers in gesteuerter Weise (sukzessive wiederholt) gesondert mit dem Zwischenverbindungskanal 29 verbunden werden.

Die Steueröffnungen 156 wirken zusammen mit der exzentrisch ausmündenden Durchgangsöffnung 152 als ein Mehr-Wege-Ventil, dessen Funktionsweise (in mechanischer Form) gleich jener der Ventile 35, 37, 39, 41 oder des Mehr-Wege-Ventils der oben beschriebenen Ventileinrichtungen 34 ist, die als mittels der elektronischen Steuervorrichtung ECU gesteuert beschrieben wurden.'

Bei der in Figuren 5F1 und 5F2 (Fig. 5F2 zeigt einen Schnitt entlang der in Fig. 5F1 mit A-A bezeichneten Linie) gezeigten Variante der mechanisch gesteuerten Ventileinrichtung 34 ist die Dichtscheibe 150 ein radial nach außen weisender Ringbund, der an dem vom Rotationskörper abgewandten, anderen Längsende 69 des Lagerschafts 7 ausgebildet ist. Die Durchgangsöffnung 152 mündet am Außenumfang des Ringbunds radial nach außen aus. Die Steuerscheibe 154 ist ein den Ringbund der Dichtscheibe 159 komplett umgreifender Ring, in dessen Innenwandung die Steueröffnungen 156 ausgebildet sind. Mit der jeweiligen Steueröffnung 156 in Fluidverbindung ist eine jeweilige der Abzweigleitungen F.

Die in Figur 5G gezeigte Variante der Ventileinrichtung 34 entspricht im Wesentlichen jener der in Figuren 5F1 und 5F2 gezeigten Variante, wobei die Dichtscheibe 150 jedoch nicht als Ringbund ausgebildet ist, sondern integral von dem am anderen Längsende 69 des Lagerschafts 7 vorliegenden Endstück des kreiszylindrischen Lagerschafts 7 ausgebildet wird.

Die in Figur 5H gezeigte Variante der Ventileinrichtung 34 entspricht ebenfalls im Wesentlichen jener der in Figuren 5F1 und 5F2 gezeigten Variante, wobei die als Ringbund ausgebildete Dichtscheibe 150 jedoch nicht stofflich einstückig mit dem Lageschaft 7 ausgebildet ist (wie z.B. bei der Variante von Figuren 5F1 und 5F2 der Fall), sondern ein vom Lagerschaft 7 separates Bauteil ist, dass drehfest und z.B. abnehmbar am Lagerschaft 7 (an dessen anderem Längsende 69) angeordnet ist.

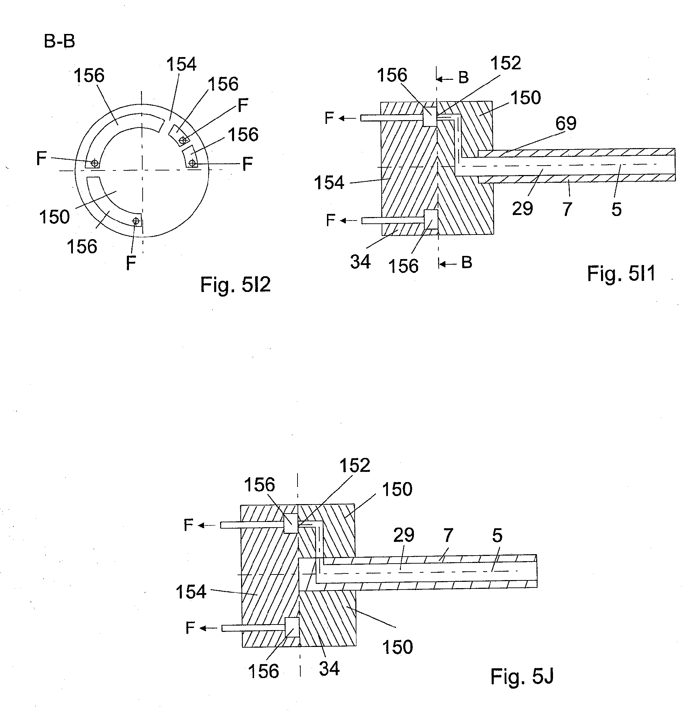

Die in den Figuren 5I1 und 5I2 gezeigte Variante der Ventileinrichtung 34 (Fig. 5I2 zeigt einen Schnitt entlang der in Fig. 5I1 mit B-B bezeichneten Linie) entspricht im Wesentlichen jener der in Figuren 5F1 und 5F2 gezeigten Variante, wobei jedoch die Steuerscheibe 154 nicht in einem radialen (umfänglichen) fluiddichten Gleitrotationseingriff mit der Dichtscheibe 150 steht, sondern in einem (bzgl. der Rotationsachse 5) axialen fluiddichten Gleitrotationseingriff bzw. Gleitrotationskontakt. Damit mündet die Durchgangsöffnung 152 der Dichtscheibe 150 nicht am Außenumfang der Dichtscheibe radial nach außen aus, sondern mündet an der vom Lagerschaft 7 abgewandten Axialseite der Dichtscheibe 150 aus. Entsprechend sind die Steueröffnungen 156 der Steuerscheibe 154 auf der dem Lagerschaft 7 zugewandten Axialseite der Steuerscheibe 154 der Dichtscheibe 150 zugewandt ausgebildet. Die Dichtscheibe 150 befindet sich ferner als eine Art Kappe auf der Stirnseite des anderen Längsendes 69 des Lagerschafts und die Durchgangsöffnung 152 verläuft vom Zwischenverbindungskanal 29 aus, zu diesem fluchtend, (in dieser Variante auch zur Rotationsachse 5 fluchtend) bis zu ihrer bezüglich der Rotationsachse 5 exzentrisch gelegenen Ausmündung. Die Steueröffnungen 156 sind in einem Radialabstand zur Rotationsachse 5 ausgebildet, der (in etwa) dem Radialabstand der exzentrischen axialen Ausmündung der Durchgangsöffnung 152 entspricht, sodass die Durchgangsöffnung 152 mit ihrer exzentrischen Ausmündung die Steueröffnungen 156 im Rahmen der Relativdrehung zwischen Steuerscheibe 154 und Dichtscheibe 152 sukzessive wiederholt überlappt, um dadurch die oben beschriebene Mehr-Wege-Ventil-Funktion durchzuführen.

Die in Figur 5J gezeigte Variante der Ventileinrichtung 34 entspricht im Wesentlichen der in Figuren 5I1 und 5I2 gezeigten Variante, wobei jedoch die Dichtscheibe nicht kappenartig auf der Stirnseite des Lagerschafts 7 angeordnet ist, sondern in Form eines auf dem anderen Längsende 69 des Lagerschafts 7 angeordneten Rings ausgebildet ist. Die Durchgangsöffnung 152 erstreckt sich damit von einer radialen Innenwandung der als Ring ausgebildeten Dichtscheibe 159 aus zu ihrer exzentrischen, axialen Ausmündung. Der Zwischenverbindungskanal 29 im Lagerschaft 7 hat einen radial verlaufenden Endabschnitt, der radial am Lagerschaft 7 ausmündet und mit der Durchgangsöffnung 152 an deren radialen inneren Ausmündung in stetiger Fluidverbindung ist.

Obwohl die Erfindung vorstehend anhand von Ausführungsbeispielen erläutert wurde, ist es für den Fachmann verständlich, dass die Erfindung nicht auf diese Ausführungsbeispiele eingeschränkt ist, sondern dass sie noch weitere Modifikationen und Abwandlungen erfasst, insofern vom durch die Ansprüche definierten Schutzumfang umfasst.

## Patentansprüche

1. Filtervorrichtung (1) zum Ausfiltern von Feststoff aus einem Feststoff-Flüssigkeit-Gemisch (3), mit
einem sich entlang einer Rotationsachse (5) erstreckenden Lagerschaft (7),
einem am Lagerschaft (7) angebrachten und mittels des Lagerschafts (7) um die Rotationsachse (5) rotierbar gelagerten Rotationskörper (15),
einer einzigen Filterzelle (17), die am Rotationskörper (15) ausgebildet ist und die aufweist: ein am Rotationskörper (15) angebrachtes Filtermittel (19) zum Ausfiltern des Feststoffs aus dem Feststoff-Flüssigkeit-Gemisch (3) unter Passieren-Lassen der Flüssigkeit des Feststoff-Flüssigkeit-Gemischs (3) von einer Filtermitteleingangsseite (21) zu einer Filtermittelausgangsseite (23) und einen Verbindungskanal (25), der im Rotationskörper (15) ausgebildet ist und sich von der Filtermittelausgangsseite (23) aus erstreckt und in einer Mündungsöffnung (27) ausmündet, die an den Lagerschaft (7) angrenzend ausgebildet ist und über welche der Verbindungskanal (25) unabhängig von der Rotationsposition des Rotationskörpers (15) stets mit einem sich im Lagerschaft (7) ausgebildeten Zwischenverbindungskanal (29) verbunden ist, welcher Zwischenverbindungskanal (29) sich in und entlang der Rotationsachse (5) erstreckt,
einer Flüssigkeitsabführleitung (31), die an den Zwischenverbindungskanal (29) angeschlossen ist oder die von dem Zwischenverbindungkanal (29) gebildet ist,
einer Mehrzahl von Abzweigleitungen (F), die von der Flüssigkeitsabführleitung (31) ausgehend abgezweigt sind, und einer Steuereinrichtung (33) mit einer Ventileinrichtung (34), mittels welcher die Abzweigleitungen (F) in Abhängigkeit von der Rotationsposition des Rotationskörpers (15) mit der Flüssigkeitsabführleitung (31) in gesteuerter Weise verbindbar sind.

2. Filtervorrichtung (1) gemäß Anspruch 1, wobei die Ventileinrichtung (34) unmittelbar an oder in der Flüssigkeitsabführleitung (31) angeordnet ist.

3. Filtervorrichtung (1) gemäß Anspruch 1 oder 2, wobei die Ventileinrichtung (34) eine Mehrzahl von Ventilen (35, 37, 39, 41) aufweist, die den Abzweigleitungen (F) zugeordnet angeordnet sind und über welche die Abzweigleitungen (F) in Abhängigkeit von der Rotationsposition des Rotationskörpers (15) mit der Flüssigkeitsabführleitung (31) in gesteuerter Weise verbindbar sind.

4. Filtervorrichtung (1) gemäß irgendeinem der Ansprüche 1-3, wobei die Steuereinrichtung (33) als eine Drucksteuervorrichtung ausgebildet ist, von welcher eine Druckdifferenz zwischen der Filtermittelausgangsseite (23) und der Filtermitteleingangsseite (21) in Abhängigkeit von der Rotationsposition des Rotationskörpers (15) von der Filtermittelausgangsseite (23) her steuerbar ist.

5. Filtervorrichtung (1) gemäß irgendeinem der Ansprüche 1-4, wobei der Lagerschaft (7) ein freies Ende (13) aufweist und wobei der Rotationskörper (15) am freien Ende des Lagerschafts (7) angebracht sowie nur einseitig über eine Lagerung (9) gelagert ist.

6. Filtervorrichtung (1) gemäß einem der Ansprüche 1-5, wobei die Steuereinrichtung (33) aufweist:
einen Sensor (S) zum Erfassen der Rotationsposition des Rotationskörpers (15) und
eine mit dem Sensor (S) und der Ventileinrichtung (34) verbundene elektronische Steuereinheit (ECU), von welcher die Ventileinrichtung (34) in Abhängigkeit von der vom Sensor (S) erfassten Rotationsposition des Rotationskörpers (15) ansteuerbar ist zum Herstellen oder Unterbrechen der Verbindung zwischen der der jeweiligen Abzweigleitung (F) und der Flüssigkeitsabführleitung (31).

7. Filtervorrichtung (1) gemäß irgendeinem der vorhergehenden Ansprüche sofern auf Anspruch 5 rückbezogen, ferner aufweisend ein abgedichtetes Gehäuse (11), in welchem der Rotationskörper (15) aufgenommen ist, wobei das Gehäuse (11) auf einer vom Lagerschaft (7) abgewandten Axialseite eine von einem abnehmbaren Gehäusedeckel (45) verschließbare Gehäuseöffnung (43) aufweist, durch welche hindurch der Rotationskörper (15) in Axialrichtung der Rotationsachse (5) aus dem Gehäuse (11) entnehmbar ist.

8. Filtervorrichtung (1) gemäß irgendeinem der vorhergehenden Ansprüche, wobei die Filterzelle (17) auf Seiten der Filtermittelausgangsseite (23) eine im Außenumfang des Rotationskörpers (15) ausgebildete Filtertasche (75) aufweist, die sich in Richtung zu dem zugehörigen Verbindungskanal verjüngt (25).

9. Filtervorrichtung (1) gemäß irgendeinem der vorhergehenden Ansprüche, wobei der Verbindungskanal (25) der Filterzelle (17) einen von der Filtermittelausgangsseite (23) aus sich senkrecht zur Rotationsachse (5) erstreckenden ersten Kanalabschnitt und einen sich vom ersten Kanalabschnitt zu der Mündungsöffnung (27)hin parallel zur Rotationsachse erstreckenden zweiten Kanalabschnitt hat, oder wobei der Verbindungskanal (25) der Filterzelle (17) sich von der Filtermittelausgangsseite (23) zu seiner Mündungsöffnung (27) hin in einem Winkel zur Rotationsachse (5) sowie zu deren Senkrechten erstreckt.

10. Filtervorrichtung (1) gemäß irgendeinem der vorhergehenden Ansprüche, wobei der Lagerschaft (7) als drehend angetriebene Drehwelle ausgebildet ist, mit welcher der Rotationskörper drehfest verbunden ist.

11. Filtervorrichtung (1) gemäß irgendeinem der vorhergehenden Ansprüche, wobei der Rotationskörper (15) über eine Schnellverschluss-Steckkupplung (73) oder Schnellverschluss-Schraubkupplung mit dem Ende des Lagerschafts (7) gekuppelt ist.

12. Filtervorrichtung (1) gemäß irgendeinem der vorhergehenden Ansprüche, ferner aufweisend ein abgedichtetes Gehäuse (11), in welchem der Rotationskörper (15) aufgenommen ist, wobei das Gehäuse (11) auf einer einer Lagerung (9) des Lageschafts (7) zugewandten Axialseite eine sich quer zur Rotationsachse (5) erstreckende Gehäusewandung (67) aufweist, welche zwischen dem Rotationskörper (15) und der Lagerung (9) angeordnet ist.

## Claims

1. Filter device (1) for filtering out solid substance from a solid-liquid-mixture (3), comprising
a bearing shaft (7) which extends along a rotation axis (5);
a rotation body (15) which is attached to the bearing shaft (7) and which is supported by the bearing shaft (7) to be rotatable about the rotation axis (5);
a single filter cell (17) which is formed on the rotation body (15) and which comprises: a filter means (19) attached to the rotation body (15) for filtering out the solid substance from the solid-liquid-mixture (3), allowing the liquid of the solid-liquid-mixture (3) to pass from a filter means inlet side (21) to a filter means outlet side (23), and a connection channel (25) which is formed in the rotation body (15) and extends from the filter means outlet side (23) and leads to an outlet opening (27) which is formed to be adjoining to the bearing shaft (7) and via which the connection channel (25) is permanently connected to an intermediate connection channel (29), which is formed in the bearing shaft (7), independent of the rotation position of the rotation body (15), which intermediate connection channel (29) extends in and along the rotation axis (5);
a liquid discharge line (31) which is connected to the intermediate connection channel (29) or is formed by the intermediate connection channel (29);
a plurality of branch-off lines (F) which are branched-off from the liquid discharge line (31); and
a control device (33) having a valve assembly (34), by which the branch-off lines (F) are connectable to the liquid discharge line (31) in a controlled manner depending on the rotation position of the rotation body (15) .

2. Filter device (1) according to claim 1, wherein the valve assembly (34) is arranged directly on or in the liquid discharge line (31).

3. Filter device (1) according to claim 1 or 2, wherein the valve assembly (34) comprises a plurality of valves (35, 37, 39, 41) which are assigned to the branch-off lines (F) and via which the branch-off lines (F) are connectable to the liquid discharge line (31) depending on the rotation position of the rotation body (15) .

4. Filter device (1) according to any one of claims 1 to 3, wherein the control device (33) is formed as a pressure control device by which a pressure difference between the filter means outlet side (23) and the filter means inlet side (21) can be controlled from the filter means outlet side (23) depending on the rotation position of the rotation body (15).

5. Filter device (1) according to any one of claims 1 to 4, wherein the bearing shaft (7) comprises a free end (13) and wherein the rotation body (15) is attached to the free end of the bearing shaft (7) and is supported via a bearing (9) only on one side.

6. Filter device (1) according to any one of claims 1 to 5, wherein the control device (33) comprises:
a sensor (S) for detecting the rotation position of the rotation body (15), and
an electronic control unit (ECU) which is connected to the sensor (S) and the valve assembly (34), by which the valve assembly (34) can be controlled depending on the rotation position, detected by the sensor (S), of the rotation body (15) for providing or disconnecting the connection between the respective branch-off line (F) and the liquid discharge line (31).

7. Filter device (1) according to any one of the preceding claims inasmuch as related to claim 5, further comprising a sealed housing (11) in which the rotation body (15) is accommodated, wherein the housing (11) comprises a housing opening (43) on an axial side facing away from the bearing shaft (7) and closable by a dismountable housing lid (45) and through which the rotation body (15) can be removed from the housing (11) in an axial direction of the rotation axis (5).

8. Filter device (1) according to any one of the preceding claims, wherein the filter cell (17) comprises a filter pocket (75) provided on the side of the filter means outlet side (23) and formed in the outer circumference of the rotation body (15) and which tapers toward the corresponding connection channel (25).

9. Filter device (1) according to any one of the preceding claims, wherein the connection channel (25) of the filter cell (17) has a first channel portion extending from the filter means outlet side (23) perpendicularly to the rotation axis (5) and has a second channel portion extending from the first channel portion to the outlet opening (27) in parallel to the rotation axis, or wherein the connection channel (25) of the filter cell (17) extends from the filter means outlet side (23) to its outlet opening (27) in an angle to the rotation axis (5) as well as to the perpendicular thereof.

10. Filter device (1) according to any one of the preceding claims, wherein the bearing shaft (7) is provided as rotatably driven rotary shaft to which the rotation body is non-rotatably connected.

11. Filter device (1) according to any one of the preceding claims, wherein the rotation body (15) is coupled to the end of the bearing shaft (7) by means of a quick fastener plug-in coupling (73) or a quick fastener screw coupling.

12. Filter device (1) according to any one of the preceding claims, further comprising a sealed housing (11) in which the rotation body (15) is accommodated, wherein the housing (11) comprises a housing wall (67) on an axial side facing a bearing (9) of the bearing shaft (7), which extends transversely to the rotation axis (5) and which is arranged between the rotation body (15) and the bearing (9).

## Revendications

1. Dispositif de filtration (1) pour le filtrage de matière solide à partir d'un mélange solide-liquide (3), comportant
un arbre palier (7) s'étendant le long d'un axe de rotation (5),
un corps de rotation (15) fixé à l'arbre palier (7) et monté de manière rotative autour de l'axe de rotation (5) moyennant l'arbre palier (7),
une seule cellule de filtrage (17) formée sur le corps de rotation (15) et comportant : un moyen de filtrage (19) fixé au corps de rotation (15) pour le filtrage de la matière solide à partir du mélange solide-liquide (3) tout en permettant le passage du liquide du mélange solide-liquide (3) d'un côté entrée du moyen de filtrage (21) vers un côté sortie du moyen de filtrage (23) et un canal de liaison (25) formé dans le corps de rotation (15) et s'étendant à partir du côté sortie du moyen de filtrage (23) et débouchant dans une embouchure (27) formée de manière à avoisiner l'arbre palier (7) et par laquelle le canal de liaison (25) est relié indépendamment de la position de rotation du corps de rotation (15) en permanence à un canal de liaison intermédiaire (29) formé dans l'arbre palier (7), ledit canal de liaison intermédiaire (29) s'étendant dans et le long de l'axe de rotation (5),
une conduite d'évacuation de liquide (31) qui est reliée au canal de liaison intermédiaire (29) ou qui est formée par le canal de liaison intermédiaire (29),
une pluralité de conduites d'embranchement (F) qui sont branchées à partir de la conduite d'évacuation de liquide (31), et
un dispositif de commande (33) ayant un moyen de soupape (34) moyennant lequel les conduites d'embranchement (F) peuvent être reliées de manière contrôlée à la conduite d'évacuation de liquide (31) en fonction de la position de rotation du corps de rotation (15) .

2. Dispositif de filtration (1) selon la revendication 1, dans lequel le moyen de soupape (34) est agencé directement sur ou dans la conduite d'évacuation de liquide (31).

3. Dispositif de filtration (1) selon la revendication 1 ou 2, dans lequel le moyen de soupape (34) comprend une pluralité de soupapes (35, 37, 39, 41) qui sont agencées de manière à être attribuées aux conduites d'embranchement (F) et par lesquelles les conduites d'embranchement (F) peuvent être reliées de manière contrôlée à la conduite d'évacuation de liquide (31) en fonction de la position de rotation du corps de rotation (15).

4. Dispositif de filtration (1) selon l'une quelconque des revendications 1 à 3, dans lequel le dispositif de commande (33) est formé comme dispositif de commande de pression par lequel une différence de pression entre le côte sortie du moyen de filtrage (23) et le côté entrée du moyen de filtrage (21) peut être contrôlée à partir du côté sortie du moyen de filtrage (23) en fonction de la position de rotation du corps de rotation (15).

5. Dispositif de filtration (1) selon l'une quelconque des revendications 1 à 4, dans lequel l'arbre palier (7) a une extrémité libre (13), et dans lequel le corps de rotation (15) est fixé à l'extrémité libre de l'arbre palier (7) et est monté seulement d'un côté moyennant un palier (9).

6. Dispositif de filtration (1) selon l'une quelconque des revendications 1 à 5, le dispositif de commande (33) comportant :
un capteur (S) pour détecter la position de rotation du corps de rotation (15), et
une unité de commande électronique (ECU) reliée au capteur (S) et au moyen de soupape (34), par laquelle le moyen de soupape (34) peut être commandé en fonction de la position de rotation du corps de rotation (15) détectée par le capteur (S) pour l'établissement ou l'interruption de la connexion entre la conduite d'embranchement (F) respective et la conduite d'évacuation de liquide (31).

7. Dispositif de filtration (1) selon l'une quelconque des revendications précédentes si reliée à la revendication 5, comportant en outre un boîtier étanche (11) dans lequel le corps de rotation (15) est logé, le boîtier (11) comportant sur un côté axial détourné de l'arbre palier (7) une ouverture de boîtier (43) qui peut être fermée par un couvercle de boîtier amovible (45), au travers laquelle le corps de rotation (15) peut être enlevé du boîtier (11) dans le sens axial de l'axe de rotation (5).

8. Dispositif de filtration (1) selon l'une quelconque des revendications précédentes, dans lequel la cellule de filtrage (17) comprend un sac de filtrage (75) formé dans la circonférence extérieure du corps de rotation (15) sur le côté du côté sortie du moyen de filtrage (23) qui se rajeunit vers le canal de liaison associé (25).

9. Dispositif de filtration (1) selon l'une quelconque des revendications précédentes, dans lequel le canal de liaison (25) de la cellule de filtrage (17) a une première partie de canal s'étendant à partir du côté sortie du moyen de filtrage (23) perpendiculairement à l'axe de rotation (5) et une deuxième partie de canal s'étendant à partir de la première partie de canal à l'embouchure (27) en parallèle à l'axe de rotation, ou dans lequel le canal de liaison (25) de la cellule de filtrage (17) s'étend à partir du côté sortie du moyen de filtrage (23) vers son embouchure (27) selon un angle à l'axe de rotation (5) et sa verticale.

10. Dispositif de filtration (1) selon l'une quelconque des revendications précédentes, dans lequel l'arbre palier (7) est formé comme arbre rotatif entraîné en rotation auquel le corps de rotation est relié de manière à ne pas tourner.

11. Dispositif de filtration (1) selon l'une quelconque des revendications précédentes, dans lequel le corps de rotation (15) est accouplé à l'extrémité de l'arbre palier (7) par un coupleur enfichable à fermeture rapide (73) ou un manchon à vis à fermeture rapide.

12. Dispositif de filtration (1) selon l'une quelconque des revendications précédentes, comportant en outre un boîtier étanche (11) dans lequel le corps de rotation (15) est logé, le boîtier (11) comportant sur un côté axial tourné vers un palier (9) de l'arbre palier (7) une paroi de boîtier (67) s'étendant transversalement à l'axe de rotation (5), agencée entre le corps de rotation (15) et le palier (9).
